# EUROPEAN PATENT APPLICATION

(11) **EP 4 742 056 A1**
(43) Date of publication of application: **13.05.2026**
(21) Application number: 24847543.6
(22) Date of filing: 23.02.2024
(51) Int. Cl.: G06F 16/245

(54) **METHOD AND APPARATUS FOR PRE-AGGREGATING TIME SERIES DATA**

(30) Priority: 02.08.2023 CN 202310966765; 22.09.2023 CN 202311235046
(71) Applicant: Huawei Cloud Computing Technologies Co., Ltd., Gui'an New District, Guizhou 550025 (CN)
(72) Inventor: WANG, Chao, Guiyang, Guizhou 550025 (CN); ZHI, Wei, Guiyang, Guizhou 550025 (CN); YI, Chuan, Guiyang, Guizhou 550025 (CN)
(74) Representative: Goddar, Heinz J.
(86) International application number: PCT/CN2024/078292
(87) International publication number: WO 2025/025576

(57) **Abstract**

A method and an apparatus for pre-aggregating time series data are provided. The method includes: obtaining at least one piece of time series data from a first device, where the first device is a generation device of the at least one piece of time series data, or the first device is a node device of a time series database, and any one of the at least one piece of time series data includes an identifier; determining a pre-aggregation method based on the identifier of the at least one piece of time series data, where a preset binding relationship exists between the pre-aggregation method and the identifier of the at least one piece of time series data; processing the at least one piece of time series data by using the pre-aggregation method, to generate pre-aggregated data; and when a usage of a memory satisfies a trigger condition, writing the pre-aggregated data and the at least one piece of time series data into a disk. The time series data and the pre-aggregated data can be evenly distributed, and storage space utilization can be improved.

## Description

This application claims priorities to Chinese Patent Application No. 202310966765.X, filed with the China National Intellectual Property Administration on August 2, 2023 and entitled "PRE-AGGREGATION METHOD AND PRE-AGGREGATION APPARATUS", and to Chinese Patent Application No. 202311235046.7, filed with the China National Intellectual Property Administration on September 22, 2023 and entitled "METHOD AND APPARATUS FOR PRE-AGGREGATING TIME SERIES DATA", which are incorporated herein by reference in their entireties.

### TECHNICAL FIELD

This application relates to the computer field, and in particular, to a method and an apparatus for pre-aggregating time series data.

### BACKGROUND

Time series data refers to a series of data that is continuously generated over time. With the continuous development of a 5th generation mobile communication technology (5th generation mobile communication technology, 5G) and an internet of things (internet of things, IoT) technology, a data amount increases explosively. The time series data is widely used in common scenarios, including an IoT, an internet of vehicles, an industrial internet, and application performance monitoring. In these scenarios, the time series data may be used for recording key information such as a device running status, operation data, and monitoring data. Analyzing and processing the time series data can help enterprises predict faults and optimize production, to support decision-making of the enterprises.

The time series data features high-frequency data generation and continuous high-concurrency writes. These features lead to long processing time of the time series data. Pre-aggregation is a method for resolving a problem of the long processing time of the time series data. In the method, the time series data is pre-aggregated in a process of writing the time series data, to generate pre-aggregated data, and the time series data is re-aggregated by using the pre-aggregated data during querying, so that efficiency of querying the time series data can be improved.

When pre-aggregation processing is performed on the time series data, a pre-aggregation time range needs to be manually set. However, generation frequencies of the time series data in different time periods are different, and manually setting the pre-aggregation time range makes it difficult to ensure that data amounts of the time series data and the pre-aggregated data in the different time ranges are the same. Uneven distribution of the time series data and the pre-aggregated data causes a decrease in storage space utilization.

### SUMMARY

Embodiments of this application provide a method and an apparatus for pre-aggregating time series data, a computer-readable storage medium, and a computer program product, to evenly distribute the time series data and pre-aggregated data, and improve storage space utilization.

According to a first aspect, an embodiment of this application provides a method for pre-aggregating time series data. The method may be performed by a server or a chip used in a server. The following uses an example in which the method is performed by the server for description. The method includes: obtaining at least one piece of time series data from a first device, where the first device is a generation device of the at least one piece of time series data, or the first device is a node device of a time series database, and any one of the at least one piece of time series data includes an identifier; determining a pre-aggregation method based on the identifier of the at least one piece of time series data, where a preset binding relationship exists between the pre-aggregation method and the identifier of the at least one piece of time series data; processing the at least one piece of time series data by using the pre-aggregation method, to generate pre-aggregated data; writing the pre-aggregated data and the at least one piece of time series data into a memory; and when a usage of the memory satisfies a trigger condition, writing the pre-aggregated data and the at least one piece of time series data into a disk.

The server may directly obtain the time series data from the generation device of the time series data, or may obtain the time series data from the node device in a server cluster. The time series data generally includes the identifier (or may be referred to as a "metric"). Based on the binding relationship between the pre-aggregation method and the identifier of the time series data, the server may determine the pre-aggregation method that needs to be used. Then, the server processes the time series data based on the determined pre-aggregation method, and writes a pre-aggregation result and the time series data into the memory. When the memory does not satisfy the trigger condition, the server may continuously obtain the time series data and pre-aggregate the time series data. When the memory satisfies the trigger condition, the server may write the time series data and the pre-aggregated data that are currently stored in the memory into the disk. Because the trigger condition remains unchanged, data amounts of the time series data and the pre-aggregated data that are written into the disk at different moments are the same, thereby ensuring that the time series data and the pre-aggregated data are evenly distributed, and improving storage space utilization for the time series data and the pre-aggregated data.

Optionally, the writing the pre-aggregated data and the at least one piece of time series data into the disk includes: writing the at least one piece of time series data into a first file in the disk; and writing the pre-aggregated data into a second file in the disk.

The pre-aggregation method may include a plurality of pre-aggregation functions, and different pre-aggregation functions serve different purposes. Comprehensive pre-aggregated data may be obtained by using the plurality of pre-aggregation functions, thereby helping improve efficiency of querying the time series data. However, a data amount of the pre-aggregated data generated by using the plurality of pre-aggregation functions may be very large. For a time series database with a built-in pre-aggregation function, time series data and pre-aggregated data are usually written into a same file. As a result, a data amount of the file increases, and the efficiency of querying the time series data is reduced. Therefore, usually, only a small quantity of pre-aggregation functions can be preset for the time series database with the built-in pre-aggregation function, and it is difficult to customize the pre-aggregation function. In this embodiment, the pre-aggregated data and the time series data are written into different files, so that the pre-aggregated data does not affect a file size of the time series data, and more pre-aggregation functions can be used to pre-aggregate the time series data without affecting the efficiency of querying the time series data, thereby serving a purpose of customizing the pre-aggregation function.

Optionally, the first file and the second file are stored in a same directory.

The first file and the second file are stored in the same directory, and the server does not need to search for the second file corresponding to the first file across directories, so that the efficiency of querying the time series data can be improved.

Optionally, the writing the pre-aggregated data and the at least one piece of time series data into the disk includes: writing the pre-aggregated data and the at least one piece of time series data into the disk in parallel.

The time series data features high-frequency data generation, continuous high-concurrency writes, and the like. If the time series data and the pre-aggregated data in the memory cannot be written into the disk in time, the memory may be insufficient, and new time series data cannot be stored in time. In this embodiment, writing is performed in parallel by using multiple threads. Even if writing of one of the pre-aggregated data and the time series data is blocked, writing of the other one may continue to be performed, and the server may release memory space as soon as possible, to avoid a loss of the new time series data caused by the insufficient memory.

Optionally, the at least one piece of time series data includes a plurality of pieces of time series data, the plurality of pieces of time series data are time series data of a same type, and the plurality of pieces of time series data are stored in a same memory block in the memory.

Different types of the time series data may use different pre-aggregation methods. The time series data of the same type is stored in the same memory block. When performing pre-aggregation processing on the time series data in the memory block, the server does not need to determine whether the time series data matches the pre-aggregation method, thereby improving pre-aggregation efficiency.

Optionally, the trigger condition includes: The usage of the memory is greater than or equal to a usage threshold; or a usage of the memory block in the memory is greater than or equal to a usage threshold, and the memory block is used for storing the pre-aggregated data and the at least one piece of time series data.

In a process of writing the data from the memory into the disk, in addition to time overheads of writing the data, there are other time overheads. When the usage of the memory or the memory block is greater than or equal to the usage threshold, a large amount of data to be written into the disk has been accumulated. In this case, the large amount of data to be written into the disk is written into the disk in a single operation, so that other time overheads can be evenly allocated, and efficiency of writing the time series data into the disk is improved. The server may release memory space as soon as possible, to avoid blocking during obtaining of a new time series data.

Optionally, before the processing the at least one piece of time series data by using the pre-aggregation method, the method further includes: receiving first indication information, where the first indication information indicates the binding relationship; and storing the identifier of the at least one piece of time series data and an identifier of the pre-aggregation method in a metadata module based on the first indication information. The determining the pre-aggregation method based on the identifier of the at least one piece of time series data includes: determining the identifier of the pre-aggregation method from the metadata module based on the identifier of the at least one piece of time series data; and determining the pre-aggregation method based on the identifier of the pre-aggregation method.

Different types of the time series data may use different pre-aggregation methods. A user may indicate, by using the first indication information, the server to pre-bind time series data to a matched pre-aggregation method. The server may store an identifier of the time series data and an identifier of the pre-aggregation method in the metadata module based on the first indication information. In this way, after obtaining the time series data, the server may directly determine the pre-aggregation method matching the time series data based on the binding relationship stored in the metadata module, and process the time series data based on the pre-aggregation method without waiting for an instruction of the user, so that pre-aggregation efficiency of the time series data is improved.

Optionally, after the writing the pre-aggregated data and the at least one piece of time series data into the disk, the method further includes: receiving second indication information, where the second indication information indicates to remove the binding relationship; and deleting, based on the second indication information, the identifier of the pre-aggregation method stored in the metadata module.

For the time series data of the same type, different pre-aggregation methods may be used in different scenarios. After current time series data is processed by using the pre-aggregation method, removing the binding relationship can facilitate processing new time series data by using a new pre-aggregation method. Therefore, this embodiment can flexibly adapt to different time series data pre-aggregation scenarios.

Optionally, the method further includes: receiving third indication information, where the third indication information indicates to deregister the pre-aggregation method; and deleting, based on the third indication information, the pre-aggregation method stored in the metadata module.

In some scenarios, there are a large quantity of pre-aggregation methods, and before pre-aggregation processing, the pre-aggregation method with the binding relationship needs to be queried from the large quantity of pre-aggregation methods. Deregistering the pre-aggregation method whose binding relationship has been removed can improve efficiency of querying the pre-aggregation method.

According to a second aspect, an embodiment of this application provides an apparatus for pre-aggregating time series data. The apparatus may include an input unit, a processing unit, and an output unit.

The input unit is configured to obtain at least one piece of time series data from a first device, where the first device is a generation device of the at least one piece of time series data, or the first device is a node device of a time series database, and any one of the at least one piece of time series data includes an identifier.

The processing unit is configured to: determine a pre-aggregation method based on the identifier of the at least one piece of time series data, where a preset binding relationship exists between the pre-aggregation method and the identifier of the at least one piece of time series data; process the at least one piece of time series data by using the pre-aggregation method, to generate pre-aggregated data; and write the pre-aggregated data and the at least one piece of time series data into a memory.

The output unit is configured to when a usage of the memory satisfies a trigger condition, write the pre-aggregated data and the at least one piece of time series data into a disk.

Optionally, the processing unit is specifically configured to: write the at least one piece of time series data into a first file in the disk; and write the pre-aggregated data into a second file in the disk.

Optionally, the first file and the second file are stored in a same directory.

Optionally, the processing unit is specifically configured to write the pre-aggregated data and the at least one piece of time series data into the disk in parallel.

Optionally, the at least one piece of time series data includes a plurality of pieces of time series data, the plurality of pieces of time series data are time series data of a same type, and the plurality of pieces of time series data are stored in a same memory block in the memory.

Optionally, the trigger condition includes: The usage of the memory is greater than or equal to a usage threshold; or a usage of the memory block in the memory is greater than or equal to a usage threshold, and the memory block is used for storing the pre-aggregated data and the at least one piece of time series data.

Optionally, before processing the at least one piece of time series data by using the pre-aggregation method, the input unit is further configured to receive first indication information, where the first indication information indicates the binding relationship. The processing unit is further configured to store the identifier of the at least one piece of time series data and an identifier of the pre-aggregation method in the metadata module based on the first indication information. The processing unit is specifically further configured to determine the identifier of the pre-aggregation method form the metadata module based on the identifier of the at least one piece of time series data, and determine the pre-aggregation method based on the identifier of the pre-aggregation method.

Optionally, after writing the pre-aggregated data and the at least one piece of time series data into the disk, the input unit is further configured to receive second indication information, where the second indication information indicates to remove the binding relationship. The processing unit is further configured to delete, based on the second indication information, the identifier of the pre-aggregation method stored in the metadata module.

Optionally, the input unit is further configured to receive third indication information, where the third indication information indicates to deregister the pre-aggregation method. The processing unit is further configured to delete, based on the third indication information, the pre-aggregation method stored in the metadata module.

According to a third aspect, an embodiment of this application provides an apparatus for pre-aggregating time series data. The apparatus may be a server, or may be a chip used in a server. The apparatus may include a processor, configured to perform the method in any one of the first aspect and the optional implementations of the first aspect.

Optionally, the apparatus may further include a transceiver. When the apparatus is the server, the transceiver may be a transceiver circuit, an antenna, or the like. When the apparatus is the chip used in the server, the transceiver may be an input/output interface, a pin, a circuit, or the like.

Optionally, the apparatus may further include a storage. The storage is configured to store instructions, and the processor executes the instructions stored in the storage, the apparatus is caused to perform the method in any one of the first aspect and the optional implementations of the first aspect. When the apparatus is the server, the storage may be a read-only memory, a random access memory, or the like. When the apparatus is the chip used in the server, the storage may be a register, a cache, or the like.

According to a fourth aspect, an embodiment of this application provides a computer-readable storage medium. The computer-readable storage medium stores a computer program; and when the computer program is executed on a computer, the computer is caused to perform the method according to any one of the first aspect and the optional implementations of the first aspect.

According to a fifth aspect, an embodiment of this application provides a computer program product. The computer program product includes computer program code or computer program instructions; and when the computer program code or the computer program instructions are run by an apparatus for pre-aggregating time series data, the apparatus is caused to perform the method according to any one of the first aspect and the optional implementations of the first aspect.

For beneficial effect of the second aspect to the fifth aspect, refer to the beneficial effect of the first aspect. Details are not described again.

### BRIEF DESCRIPTION OF DRAWINGS

FIG. 1 is a diagram of a system applicable to this application;
FIG. 2 is a diagram of a method for pre-aggregating time series data according to an embodiment of this application;
FIG. 3 is a diagram of another method for pre-aggregating time series data according to an embodiment of this application;
FIG. 4 is a diagram of a method for registering a pre-aggregation function according to an embodiment of this application;
FIG. 5 is a diagram of a method for binding a pre-aggregation function according to an embodiment of this application;
FIG. 6 is a diagram of a method for using a pre-aggregation function according to an embodiment of this application;
FIG. 7 is a diagram of a method for unbinding a pre-aggregation function according to an embodiment of this application;
FIG. 8 is a diagram of a method for deregistering a pre-aggregation function according to an embodiment of this application;
FIG. 9 is a diagram of an apparatus for pre-aggregating time series data according to an embodiment of this application; and
FIG. 10 is a diagram of a server according to an embodiment of this application.

### DESCRIPTION OF EMBODIMENTS

The following describes technical solutions of this application with reference to accompanying drawings.

For ease of understanding the technical solutions in embodiments of this application, concepts in embodiments of this application are first briefly described.

### 1. Time series (time series) data

The time series data refers to data that is recorded in chronological order and that are of a same metric (metric) of a same type, and represents data generated at a specific time point. A feature of the time series data is that each piece of data has a timestamp, and the data includes a triplet (a metric, a timestamp, and a value). A plurality of metrics of the same type may be referred to as a timeseries.

A smart meter that records electricity consumption of a home is used as an example. Two pieces of time series data generated by the smart meter are <power, 2023-6-20 20:30, 99> and <power, 2023-6-20 20:31, 100>, where the powers represent electricity amounts recorded by the smart meter, that is, metrics of the two pieces of time series data; 2023-6-20 20:30 and 2023-6-20 20:31 represent moments corresponding to the electricity amounts recorded by the smart meter, that is, timestamps of the two pieces of time series data; and 99 and 100 represent specific degrees of the electricity amounts recorded by the smart meter, that is, values of the two pieces of time series data. The two powers form one timeseries.

Different from other data, the time series data is more suitable for reflecting a process of data "changing". After values of the time series data are connected to form a line in time coordinates, a multi-dimensional report can be formed. These reports can be used for revealing trends and regularity of the data, capturing anomalies, and implementing prediction and warning.

In recent years, the time series data is used in a wider range. The time series data is widely used in fields such as an IoT, economic and financial fields, environment monitoring, medicine, industrial manufacturing, agricultural production, and hardware/software system monitoring. The use of the time series data can reveal trends, regularity, and anomalies of research objects. With the emergence of artificial intelligence, the time series data, as basic data, plays a more prominent role in big data, machine learning, real-time prediction and warning, and other aspects. Therefore, the research and application of the time series data become more in-depth and important.

For example, in the self-driving field, a location of a vehicle changes with time, and other attributes (for example, a model, a color, and a license plate number) of the vehicle remain unchanged. Time-related location data forms a group of time series data. The time series data is also widely used on the internet, such as website access records of a user and system log data.

The time series data has the following features.
(1) The most definite feature of the time series data is that the time series data has a unique timestamp. A key difference between the time series data and relational data lies in that the time series data uses the timestamp as a unique identifier. The relational data typically uses another field as a unique identifier. For example, student data usually uses a student number as an identifier for distinguishing.
(2) The time series data keeps increasing, and new data is generated at each time granularity. A data amount of the time series data keeps increasing linearly, and massive data is continuously generated, resulting in a huge data amount. However, the relational data does not increase with time. For example, a data amount of students in a school is relatively stable in a period of time.
(3) The time series data is seldom updated. Once a measurement value at a specific moment is recorded, the measurement value will not be changed any more. Therefore, there is almost no need to update the time series data. For example, a temperature sensor records only a temperature value once in one measurement periodicity. For the relational data, existing data is frequently updated. For example, student personal information (for example, a home address) may be frequently changed.
(4) The time series data has a cold and hot characteristic. Time series data that is close to current time is of high value and can be stored as hot data. Value of time series data that is far away from the current time is gradually reduced, and the time series data can be archived as cold data.

In addition, the time series data further features high-frequency data generation, continuous high-concurrency writes, and the like.

### 2. Time series database

Based on the rapid growth of time series data application requirements and characteristics different from that of conventional relational data, the time series database emerges. The time series database is a database system dedicated to storage and querying of the time series data. Compared with a conventional relational database, the time series database focuses more on writing and querying massive data, and does not need to have a complex transaction management capability.

The time series database has the following several features.
(1) Capability of writing high-throughput data in a high speed: In a time series data service, massive time series data is continuously generated and has high requirements on data write speeds. Therefore, the time series database needs to have the capability of writing high-throughput data in a high speed to ensure timeliness and reliability of the time series data.
(2) High compression rate: An amount of the time series data is large and the time series data needs to be stored for a long time. Therefore, the time series data needs to be compressed to save storage space and improve efficiency of querying.
(3) Efficient time window querying capability: Querying requirements of the time series data service are usually classified into real-time data querying and historical data querying. For historical data querying, a large amount of data in a time window usually needs to be queried. Therefore, data querying needs to be optimized to improve the efficiency of querying.
(4) Efficient aggregation capability: The time series data service usually focuses on an aggregation value of data, for example, aggregation functions such as mean and count, to reflect a data status in a time period. Therefore, the time series database needs to provide an efficient aggregation capability.
(5) Capability of batch overwriting and batch deletion: Expired time series data needs to be overwritten or deleted in batches in time, to ensure stability and performance of the time series database.
(6) High scalability and high reliability: The time series database may support a distributed architecture and dynamically scaling a quantity of nodes, to satisfy requirements of different data scales. In addition, operations such as data backup and redundancy can be implemented, to improve the reliability of the time series data.
(7) Large-scale parallel computing capability: The capability can be used to process time series data on a plurality of nodes and concurrently execute complex querying, to improve the efficiency of querying.

In addition, the time series database usually further needs to have a capability of comprehensive data processing and analysis, for example, performing operations such as data cleaning, statistics collection, analysis, and prediction, to provide more value for a service.

Based on the foregoing features, time domain database may serve the following scenarios.

IoT: A large amount of timeseries data collected by a sensor in the IoT, such as a temperature, humidity, and pressure, needs to be quickly and effectively stored and queried. The time series database provides efficient data storage and querying functions, to provide important support for IoT applications.

Finance: Financial data has timeseries characteristics. Data, such as stock prices, transaction volumes, and exchange rates, needs to be processed and monitored in real time. The time series database may help data analysts and traders quickly query data for decision-making.

Commercial retail: The time series database may be used for processing order transaction amount, payment data, commodity inventory, and logistics data of e-commerce systems.

Industrial: The time series database may be used for processing industrial machine data, such as the real-time speed, wind speed, and energy yield of wind turbines.

Development operations (development operations, DevOps): Various logs and metrics need to be collected, stored, and analyzed in a DevOps environment, to quickly locate and rectify faults. The time series database may provide reliable data storage and querying support for DevOps.

Artificial intelligence: Artificial intelligence applications need to process a large amount of timeseries data, including video, audio, text data, and the like. The time series database may support using an artificial intelligence algorithm to process and analyze the data.

Energy and public utilities: The energy and public utilities need to monitor sensor data, a power grid status, weather information, and the like in real time, to ensure normal system running. The time series database may provide efficient data storage and querying, to monitor and control the power grid system.

Smart city construction: The time series database may be used for analyzing city operation data in real time, optimizing city public services, improving city water supply, power supply, and public transportation, and the like.

Scientific research: The time series database may be used for storing and analyzing various types of scientific data, such as meteorological data, seismic data, and biological data.

The foregoing application scenario is an example rather than a limitation. Application scenarios of the time series database are not limited in embodiments of this application.

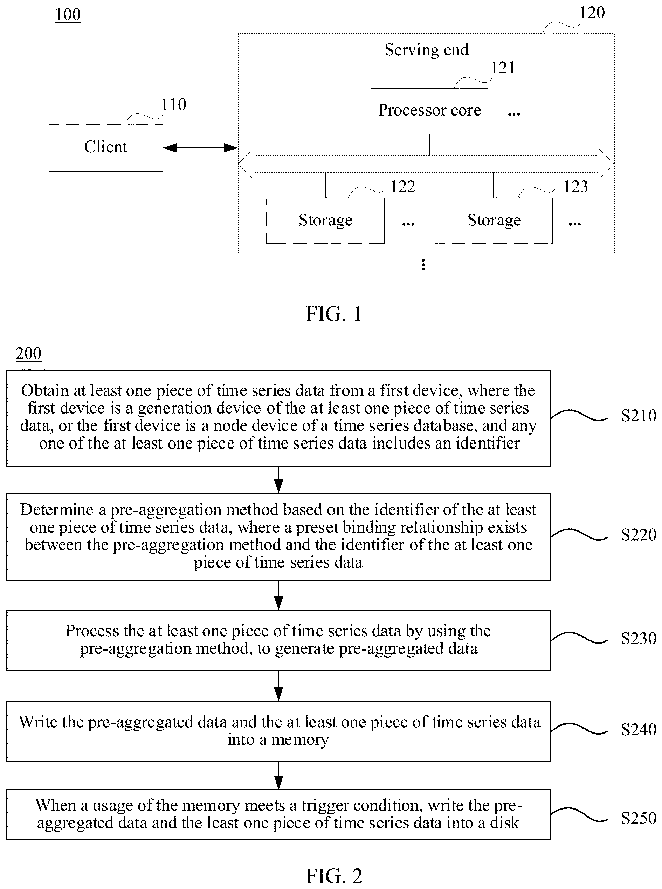

The following describes a system applicable to embodiments of this application. As shown in FIG. 1, the system 100 includes a client 110 and at least one serving end 120. When the system 100 includes one serving end 120, the serving end 120 may be referred to as a standalone server. When the system 100 includes a plurality of serving ends 120, the serving end 120 may be referred to as a cluster server.

The client 110 may be a mobile phone (mobile phone), a pad (Pad), a computer with a wireless transceiver function, a virtual reality (virtual reality, VR) terminal, an augmented reality (augmented reality, AR) terminal, a wireless terminal in industrial control (industrial control), an entire vehicle, a wireless communication module in an entire vehicle, a telematics box (telematics box, T-box), a roadside unit (road site unit, RSU), a wireless terminal in uncrewed driving, a smart speaker in an IoT, a wireless user device in telemedicine (remote medical), a wireless user device in a smart grid (smart grid), or a wireless user device in an intelligent network, a wireless user device in transportation safety (transportation safety), a wireless user device in a smart city (smart city), or wireless user device in a smart home (smart home). This is not limited in this embodiment of this application.

By way of example, and not limitation, in embodiments of this application, the client 110 may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not merely a hardware device, but implements a powerful function through software support, data interaction, and cloud interaction. In a broad sense, intelligent wearable devices include full-featured and large-size electronic devices that can implement complete or partial functions without depending on smartphones, for example, smart watches or smart glasses, or include electronic devices that are dedicated to only one type of application function and that need to be used together with other devices such as smartphones, for example, various smart bands or smart jewelry used for measuring physical signs.

The serving end 120 includes at least one processor core 121 and at least one storage 122. Optionally, the serving end 120 may further include at least one storage 123, that is, the storage 123 may be integrated into the serving end 120, or may be disposed outside the serving end 120.

The at least one processor core 121 may be located in one processor, or may be located in different processors. The processor may be a central processing unit (central processor unit, CPU), a system chip (system on chip, SoC), an application-specific integrated circuit (application specific integrated circuit, ASIC), a field programmable gate array (field programmable gate array, FPGA), a microcontroller (micro controller unit, MCU), a programmable controller (programmable logic device, PLD), or another logic device such as a discrete gate, a transistor logic device, or a discrete hardware component.

As a cache, the storage 122 may also be referred to as a memory, and is usually a volatile memory. By way of example, and not limitation, the storage 122 may be a random access memory (random access memory, RAM), for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

As a persistent storage device, the storage 123 may also be referred to as a magnetic disk or a hard disk drive, and is usually a non-volatile memory. By way of example, and not limitation, the storage 122 may be a read-only memory (read-only memory, ROM), for example, a programmable read-only memory (programmable ROM, PROM), an erasable programmable read-only memory (erasable PROM, EPROM), an electrically erasable programmable read-only memory (electrically EPROM, EEPROM), or a flash memory.

The processor core 121, the storage 122, and the storage 123 may be interconnected by using a technology such as a bus. Specific types of the processor core 121, the storage 122, and the storage 123 are not limited in this embodiment of this application, and a communication manner between the processor core 121, the storage 122, and the storage 123 is not limited in this embodiment of this application.

By way of example, and not limitation, in this embodiment of this application, the serving end 120 may be a tower server, a blade server, a rack server, or a cabinet server, or the serving end 120 may be a complex instruction set computer (complex instruction set computer, CISC) server, a reduced instruction set computer (reduced instruction set computer, RISC) server, or an explicitly parallel instruction computing (explicitly parallel instruction computing, EPIC) server. The serving end 120 may further be a virtual server, for example, a virtual machine (virtual machine, VM) or a docker (docker).

The client 110 may communicate with the serving end 120 by using a wired connection, or may communicate with the serving end 120 by using a wireless connection. The wired connection may be an optical fiber or a cable, and the wireless connection may be a cellular network connection, wireless fidelity (wireless fidelity, Wi-Fi), or Bluetooth. A connection manner between the client 110 and the serving end 120 is not limited in this embodiment of this application.

A time series database is installed on the serving end 120, and the time series database performs pre-aggregation processing on time series data when the time series data is stored. For example, a count function is used to count a quantity of time series data in one time window, and a max function is used to count a largest value of the time series data in one time window. The quantity of the time series data and the largest value of the time series data are pre-aggregated data. Therefore, the time series database stores at least one piece of time series data and pre-aggregated data corresponding to the at least one piece of time series data.

The client 110 is configured to provide a query entry for a user, that is, the user may enter a query request by using the client 110, where the query request is used for querying the time series data in the time series database on the serving end 120. After receiving the query request, the client 110 sends the query request to the serving end 120.

After receiving the query request, the serving end 120 executes a query task by using the time series database, and the time series database determines, based on a pre-aggregation result, content required by the user.

For example, the query request is used for querying an amount of time series data from June 20 to June 21. If a time window of the statistics collection by using the count function in the time series database is one day, the time series database may perform an addition operation (that is, secondary aggregation) on a result of the statistics collection by using the count function on June 20 and a result of the statistics collection by using the count function on June 21, to obtain the content required by the user.

For another example, the query request is used for querying a largest value of time series data on June 20. If a time window of the statistics collection by using the count function in the time series database is one day, the time series database may determine, based on a result of the statistics collection by using the max function on June 20, the content required by the user.

After obtaining content corresponding to the query request, the time series database sends the content to the client 110 through a communication interface between the serving end 120 and the client 110, and the client 110 displays the content to the user.

With an increase in an amount of time series data in an internet of things, the performance requirements for time series data aggregation query in the case of a large data amount are increasingly high. High-performance time series query becomes a key requirement of more and more services. Time required for aggregation query is huge, for example, millisecond-level single-metric aggregation query and millisecond-level multi-metric aggregation query.

Time series data is high-frequency generation, continuous high-concurrency writes, and has a large amount of data, which undoubtedly makes the aggregation query difficult. Therefore, a pre-aggregation technology is proposed in the industry. In the pre-aggregation technology, aggregated data is pre-generated in a data writing process for storage. During querying, the pre-aggregated data may be used for secondary aggregation, so that the aggregation query can be accelerated. The pre-aggregation technology has become one of the important means to improve the efficiency of aggregation query.

When pre-aggregation processing is performed on the time series data, a pre-aggregation time range usually needs to be manually set. However, generation frequencies of the time series data may be different in different time periods. For example, in the financial field, when a transaction volume in a period of time is large, a large amount of transaction data (that is, the time series data) is generated; and when a transaction volume in a period of time is small, a small amount of transaction data (that is, the time series data) is generated. Manually setting the pre-aggregation time range cannot ensure that the time series data and the pre-aggregated data in different time ranges have a same data amount. Uneven distribution of the time series data and the pre-aggregated data causes a decrease in storage space utilization.

The following describes a method for pre-aggregating time series data according to an embodiment of this application. The method may be performed by a server or a chip used in a server. The following uses an example in which the method is performed by the server for description.

As shown in FIG. 2, the method 200 includes the following content.

S210: Obtain at least one piece of time series data from a first device, where the first device is a generation device of the at least one piece of time series data, or the first device is a node device of a time series database, and any one of the at least one piece of time series data includes an identifier.

The server may directly obtain time series data from a device (for example, an IoT device) that generates the time series data. For example, after generating the time series data, a smart meter transmits the time series data to a serving end 120 through an IoT.

Alternatively, the server may obtain time series data from a node device. For example, a serving end 120 obtains the at least one piece of time series data from another serving end in a server cluster to which the serving end 120 belongs.

A specific method for obtaining the at least one piece of time series data is not limited in this embodiment of this application.

S220: Determine a pre-aggregation method based on the identifier of the at least one piece of time series data, where a preset binding relationship exists between the pre-aggregation method and the identifier of the at least one piece of time series data.

An identifier of time series data is a metric of the time series data. For example, one piece of time series data generated by the smart meter is <power, 2023-6-20 20:30, 99>, where the power represents an electricity amount recorded by the smart meter, that is, an identifier or a metric of the time series data.

A metadata module of the server stores the preset binding relationship, and the binding relationship includes the identifier of at least one piece of time series data and an identifier of the associated pre-aggregation method. The server may determine an identifier of a pre-aggregation function based on the binding relationship and the identifier of the at least one piece of time series data, to determine the pre-aggregation function that needs to be used.

S230: Process the at least one piece of time series data by using the pre-aggregation method, to generate pre-aggregated data.

The pre-aggregation method may be a pre-aggregation function, for example, a count function, a max function, or a sum function. The count function is used for collecting statistics on an amount of time series data in one time window, the max function is used for collecting statistics on a largest value of the time series data in one time window, and the sum function is used for collecting statistics on a sum of the time series data in one time window.

The server may execute the pre-aggregation function once each time a piece of new time series data is obtained, or may execute the pre-aggregation function once after obtaining a plurality of pieces of time series data.

For example, after obtaining time series data 1, the server executes the max function once. If a value of the time series data 1 in a current time window is the largest, the time series data 1 is recorded in the pre-aggregated data. After obtaining time series data 2, the server executes the max function again. If a value of the time series data 2 in the current time window is the largest, the time series data corresponding to the largest value in the pre-aggregated data is updated to the time series data 2.

For another example, after the server obtains time series data 1, because an amount of newly obtained time series data does not exceed an amount threshold (where it is assumed that there is currently only one piece of newly obtained time series data, that is the time series data 1, and the amount threshold is 2), the server does not execute the max function. After the server obtains time series data 2, the amount of newly obtained time series data still does not exceed the amount threshold, and the server does not execute the max function. After the server obtains time series data 3, the amount of newly obtained time series data exceeds the amount threshold, the server executes the max function once to determine a largest value of the time series data in a current time window. The pre-aggregation function is executed when the amount of newly obtained time series data exceeds the amount threshold, so that a quantity of pre-aggregation function executions can be reduced, thereby reducing computing overheads of the server.

The server may process the time series data by using one pre-aggregation function, or may process the time series data by using a plurality of pre-aggregation functions. When processing the time series data by using one pre-aggregation function, the server may generate one piece of pre-aggregated data. When processing the time series data by using a plurality of pre-aggregation functions, the server may generate a plurality of pieces of pre-aggregated data.

For example, the server may execute the count function on the time series data in the current time window, to generate a count result, where the count result is the pre-aggregated data. Alternatively, the server may separately execute the count function and the max function on the time series data in the current time window, to generate a count result and a max result, where the count result and the max result are two pieces of pre-aggregated data.

After obtaining the time series data and generating the pre-aggregated data, the server performs the following steps.

S240: Write the pre-aggregated data and the at least one piece of time series data into a memory.

S250: When a usage of the memory satisfies a trigger condition, write the pre-aggregated data and the at least one piece of time series data into a disk.

Optionally, the trigger condition may be that the usage of the memory is greater than or equal to a usage threshold. In this case, the memory in S250 should be understood as entire memory space.

For example, after the server writes 1000 pieces of time series data and pre-aggregated data of the 1000 pieces of time series data into the memory, the usage of the memory reaches 81%. If the usage threshold is 80%, the server may perform a disk write operation, to be specific, write the 1000 pieces of time series data and the corresponding pre-aggregated data into the disk, and release the memory space.

Optionally, the trigger condition may alternatively be that a usage of a part of memory blocks in the memory is greater than or equal to a usage threshold. In this case, the memory in S250 should be understood as memory space (or a memory block) for storing the pre-aggregated data and the at least one piece of time series data.

For example, the memory includes a plurality of memory blocks, different memory blocks are configured to store time series data and pre-aggregated data that correspond to different metrics. The plurality of memory blocks include a memory block 1. After the server writes the time series data and the pre-aggregated data of the smart meter into the memory block 1, a usage of the memory block 1 reaches 81%. If the usage threshold is 80%, the server may perform a disk write operation, to be specific, write the time series data and the corresponding pre-aggregated data in the memory block 1 into the disk, and release the memory block 1. Different memory blocks may be different physical space, or may be different logical space. This is not limited in this embodiment of this application.

The usage of the memory may also be replaced by another equivalent parameter. For example, when a data amount of the time series data and the pre-aggregated data that are in the memory and that are to be written into the disk is greater than or equal to a data amount threshold, the server may perform the disk write operation. All parameters equivalent to the usage of the memory fall within the protection scope of this application.

In a process of writing the data from the memory into the disk, in addition to time overheads of writing the data, there are other time overheads. When the usage of the memory is greater than or equal to the usage threshold, a large amount of data to be written into the disk has been accumulated. In this case, the large amount of data to be written into the disk is written into the disk in a single operation, so that other time overheads can be evenly allocated, and efficiency of writing the time series data into the disk is improved. The server may release the memory space as soon as possible, to avoid blocking during obtaining of the new time series data.

When the usage of the memory does not satisfy the trigger condition, the server may continuously obtain the time series data and pre-aggregate the time series data. When the memory satisfies the trigger condition, the server may write the time series data and the pre-aggregated data that are currently stored in the memory into the disk. Because the trigger condition remains unchanged, data amounts of the time series data and the pre-aggregated data that are written into the disk at different moments are the same, thereby ensuring that the time series data and the pre-aggregated data are evenly distributed, and improving storage space utilization for the time series data and the pre-aggregated data.

Optionally, when performing S250, the server may specifically perform the following steps:
writing the at least one piece of time series data into a first file in the disk; and writing the pre-aggregated data into a second file in the disk.

In embodiments of this application, "first" and "second" are used for distinguishing between different objects, and there is no other limitation. For example, the first file and the second file represent two files, the first file may be a data file, and the second file may be an agg file. Specific types of the first file and the second file are not limited in this embodiment of this application.

The pre-aggregation method may include a plurality of pre-aggregation functions, and different pre-aggregation functions serve different purposes. Comprehensive pre-aggregated data may be obtained by using the plurality of pre-aggregation functions, thereby helping improve efficiency of querying the time series data. However, a data amount of the pre-aggregated data generated by using the plurality of pre-aggregation functions may be very large. For a time series database with a built-in pre-aggregation function, time series data and pre-aggregated data are usually written into a same file. As a result, a data amount of the file increases, and the efficiency of querying the time series data is reduced. Therefore, usually, only a small quantity of pre-aggregation functions can be preset for the time series database with the built-in pre-aggregation function, and it is difficult to customize the pre-aggregation function. In this embodiment, the pre-aggregated data and the time series data are written into different files, so that the pre-aggregated data does not affect a file size of the time series data, and more pre-aggregation functions can be used to pre-aggregate the time series data without affecting the efficiency of querying the time series data, thereby serving a purpose of customizing the pre-aggregation function.

Optionally, the first file and the second file are stored in a same directory.

The smart meter as an example. If a first file corresponding to the time series data of the smart meter is 12345678.data, and a second file corresponding to the pre-aggregated data of the smart meter is 12345678.agg, a directory structure of the first file may be ···./power/20220105/12345678.data, and a directory structure of the second file may be ···./power/20220105/12345678.agg.

The first file and the second file are stored in the same directory, and the server does not need to search for the second file corresponding to the first file across directories, so that the efficiency of querying the time series data can be improved.

Optionally, when performing S250, the server may specifically perform the following step:
writing the pre-aggregated data and the at least one piece of time series data into the disk in parallel.

For example, the server may separately process disk writing operations of the pre-aggregated data and the time series data by using two threads. In this way, the pre-aggregated data and the time series data may be written into the disk in parallel. If the disk writing operation of the pre-aggregated data is blocked, the disk writing operation of the time series data may still be performed. If the disk writing operation of the time series data is blocked, the disk writing operation of the pre-aggregated data may still be performed.

The time series data features high-frequency data generation, continuous high-concurrency writes, and the like. If the time series data and the pre-aggregated data in the memory cannot be written into the disk in time, the memory may be insufficient, and new time series data cannot be stored in time. In this embodiment, writing is performed in parallel by using multiple threads. Even if writing of one of the pre-aggregated data and the time series data is blocked, writing of the other one may continue to be performed, and the server may release the memory space as soon as possible, to avoid a loss of the new time series data caused by the insufficient memory.

Optionally, the at least one piece of time series data includes a plurality of pieces of time series data, the plurality of pieces of time series data are time series data of a same type, and the plurality of pieces of time series data are stored in a same memory block in the memory.

Different types of the time series data may use different pre-aggregation methods. The time series data of the same type is stored in the same memory block. When performing pre-aggregation processing on the time series data in the memory block, the server does not need to determine whether the time series data matches the pre-aggregation method, thereby improving pre-aggregation efficiency.

For example, the server obtains a plurality of pieces of time series data generated by the smart meter and a plurality of pieces of time series data generated by a financial system. The server may store the plurality of pieces of time series data generated by the smart meter in a memory block 1, store the plurality of pieces of time series data generated by the financial system in a memory block 2, and separately process the time series data in the memory block 1 and the memory block 2 by using different pre-aggregation functions, so that the pre-aggregation efficiency can be improved.

The foregoing describes in detail the method for processing the time series data based on the pre-aggregation method. Because different time series data may use different pre-aggregation methods, before performing the pre-aggregation method, the server needs to bind the pre-aggregation method to the time series data.

Optionally, before performing S230, the server may store the binding relationship between the pre-aggregation method and the at least one piece of time series data. Then, when performing S230, the server may process the at least one piece of time series data by using the pre-aggregation method. For example, the method 200 further includes:
receiving first indication information, where the first indication information indicates the binding relationship; and
storing the identifier of the at least one piece of time series data and the identifier of the pre-aggregation method in the metadata module based on the first indication information.

When performing S220, the server may specifically perform the following steps:
determining the identifier of the pre-aggregation method from the metadata module based on the identifier of the at least one piece of time series data; and
determining the pre-aggregation method based on the identifier of the pre-aggregation method.

For example, a user may indicate, by using the first indication information, the server to bind a timeseries power and a count function. The server may generate, based on the first indication information, metadata including identifiers of the power and the count function, and store the metadata in the metadata module. In this way, when pre-aggregating time series data whose metric is the power, the server queries the metadata module for a pre-aggregation function corresponding to the power, to obtain the identifier of the count function, so as to determine to pre-aggregate the time series data whose metric is the power by using the count function.

The server may alternatively bind a plurality of pre-aggregation functions to one timeseries. For example, the server may bind a count function and a max function to a timeseries power, and store the binding relationship in the metadata module as metadata. In this way, when pre-aggregating time series data whose metric is the power, the server may perform pre-aggregation by using the count function and the max function.

The timeseries is pre-bound to a matched pre-aggregation method, and the server may obtain information related to the pre-aggregation method in advance based on the binding relationship. In this way, after obtaining the time series data, the server may directly process the time series data without waiting for an instruction of the user, so that pre-aggregation efficiency of the time series data is improved.

Optionally, after performing S250, the server may further perform the following steps:
receiving second indication information, where the second indication information indicates to remove the binding relationship; and
deleting, based on the second indication information, the identifier of the pre-aggregation method stored in the metadata module.

For the time series data of the same type, different pre-aggregation methods may be used in different scenarios. After current time series data is processed by using the pre-aggregation method, removing the binding relationship can facilitate processing new time series data by using a new pre-aggregation method, and flexibly adapt to different time series data pre-aggregation scenarios.

For example, a customer A needs to determine a quantity of timeseries powers in a time window A, and the server may bind the count function to the timeseries power, and store the binding relationship in the metadata module. In this way, when pre-aggregating time series data whose metric is the power in the time window A, the server may perform pre-aggregation by using the count function. After completing a task of the customer A, the server may remove the binding relationship between the timeseries power and the count function. If a customer B needs to determine a largest value of the timeseries power in a time window B, the server may bind the max function to the timeseries power, and store the binding relationship in the metadata module. In this way, when pre-aggregating time series data whose metric is the power in the time window B, the server may perform pre-aggregation by using the max function.

Optionally, the server may further perform the following steps:
receiving third indication information, where the third indication information indicates to deregister the pre-aggregation method; and
deleting, based on the third indication information, the pre-aggregation method stored in the metadata module.

For example, when the pre-aggregation function can be customized, the metadata module may store a large amount of metadata of the pre-aggregation function. Before executing the pre-aggregation function, the server needs to query the metadata module for a pre-aggregation function with a binding relationship, and deregister a pre-aggregation method whose binding relationship has been removed (that is, delete metadata of a pre-aggregation function whose binding relationship has been removed), so that efficiency of querying the pre-aggregation method can be improved.

The following describes another method for pre-aggregating time series data according to an embodiment of this application.

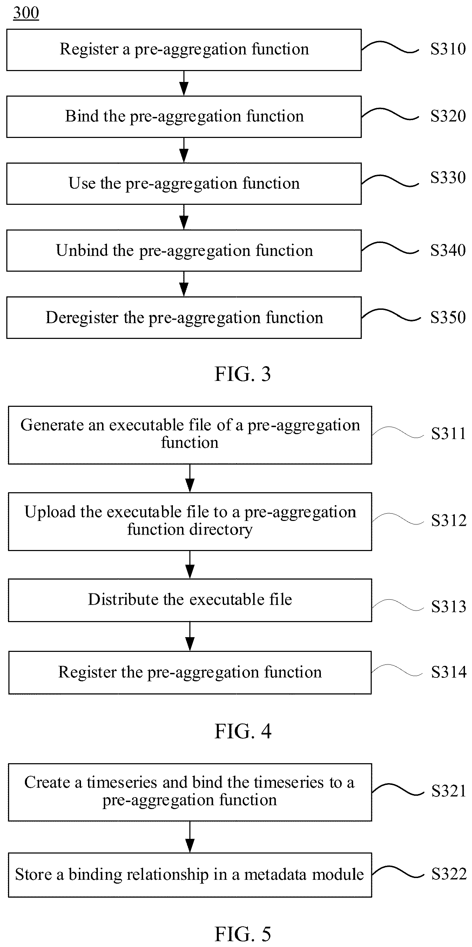

As shown in FIG. 3, the method includes the following content.

S310: Register a pre-aggregation function.

S320: Bind the pre-aggregation function.

S330: Use the pre-aggregation function.

S340: Unbind the pre-aggregation function.

S350: Deregister the pre-aggregation function.

The following describes these steps in detail.

As shown in FIG. 4, S310 may include the following content.

S311: Generate an executable file of the pre-aggregation function.

A user may compile the pre-aggregation function according to a function customizing rule of a time series database, to generate the executable file of the pre-aggregation function.

For example, the function customizing rule allows inputting a plurality of pieces of data and outputting one piece of data. The function customizing rule also supports setting of data types of input data and output data. In this case, the user may compile a sum function according to the function customizing rule, set an input data type of the sum function to: supporting int, double, and float, and set an output data type of the sum function to: supporting double. After compilation is complete, the executable file sumFunction.jar is generated.

S312: Upload the executable file to a pre-aggregation function directory.

For example, the user may upload the executable file to the pre-aggregation function directory by using a client 110, to facilitate the time series database to read the executable file.

S313: Distribute the executable file.

In some cases, a server architecture in which the time series database is located is a cluster architecture. After reading the executable file, a node in the cluster architecture may distribute the executable file to another node in a server cluster. For a standalone server, this step does not need to be performed.

S314: Register the pre-aggregation function.

After reading the executable file, the time series database loads the executable file into an executor, and writes metadata of the pre-aggregation function into a metadata module, that is, registers the pre-aggregation function. The sum function is used as an example. The following is an example of a command for registering the pre-aggregation function:
CREATE PREAGGFUNCTION sum AS 'org.apache.udf.sumFunction' location '/srv/sumFunction.jar'.

The user may determine, by querying the metadata module, a pre-aggregation function supported by a time series data block.

As shown in FIG. 5, S320 may include the following content.

S321: The user creates a timeseries and binds the timeseries to the pre-aggregation function.

For example, the user may create a timeseries power by using the client 110, and bind one or more pre-aggregation functions to the timeseries power.

The following is an example of a command for creating the timeseries and binding the timeseries to the pre-aggregation function:
CREATE TIMESERIES power with datatype=INT32, pre_agg=sum.

S322: Store a binding relationship in the metadata module.

The user may determine, by querying the metadata module, the pre-aggregation function bound to the timeseries.

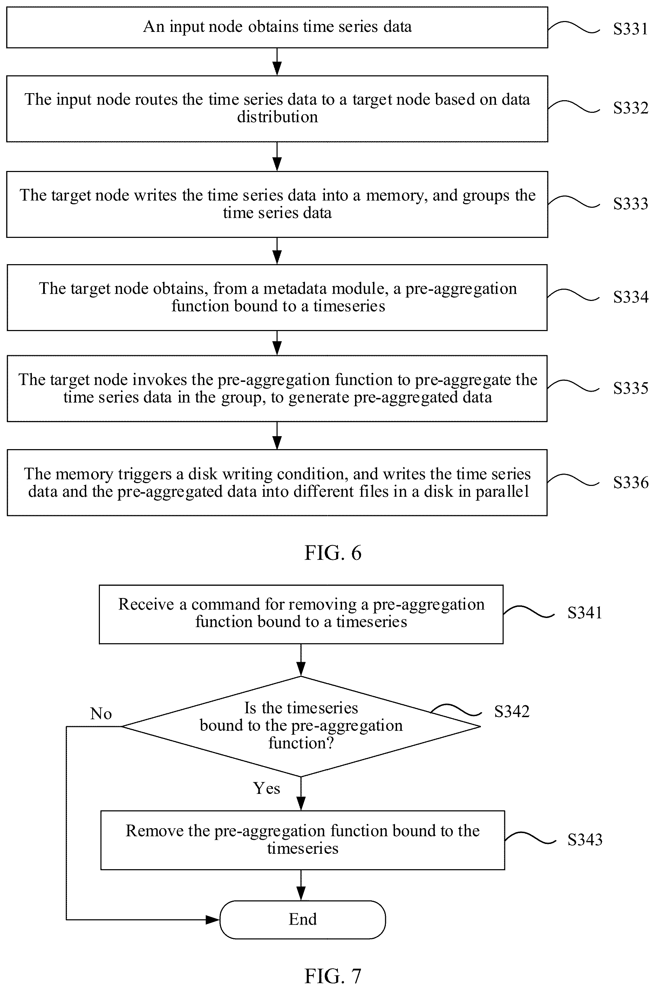

As shown in FIG. 6, S330 may include the following content.

S331: An input node obtains the time series data.

The time series database is oriented to massive data processing. Therefore, it needs to have efficient write, storage, and read capabilities. However, in a single-node environment, neither hardware nor software can satisfy this requirement. Therefore, the time series database needs to use distributed storage to solve this problem. Data is distributed to cluster servers for storage, processing, and reading, to satisfy the requirements of high performance, high availability, and high fault tolerance.

The input node is a first server that obtains the time series data in the cluster server.

S332: The input node routes the time series data to a target node based on data distribution.

If a load of the input node is high, the input node may perform S332 to route, based on the data distribution, the time series data to a server with low load, that is, the target node. If load of the input node is low, the input node may skip S332, and locally processes the time series data. In this case, the input node is the target node.

S333: The target node writes the time series data into the memory, and groups the time series data.

Because the time series data features high-frequency generation, continuous high-concurrency writes, and the like, the target node may obtain a large amount of time series data in a short time. The target node may perform grouping based on a metric of the time series data, and store time series data of the same metric in the same area, to facilitate pre-aggregation processing.

For example, the target node obtains two pieces of time series data generated by the smart meter, which are respectively <power, 2023-6-20 20:30, 99> and <power, 2023-6-20 20:31, 100>. The target node may store the two pieces of time series data in one memory block based on metric powers of the two pieces of time series data.

S334: The target node obtains, from the metadata module, the pre-aggregation function bound to the timeseries.

For example, the target node obtains two pieces of time series data generated by the smart meter, which are respectively <power, 2023-6-20 20:30, 99> and <power, 2023-6-20 20:31, 100>, the target node may obtain, from the metadata module based on metric powers of the two pieces of time series data, pre-aggregation function information bound to the timeseries power, and invoke the pre-aggregation function based on the pre-aggregation function information.

After obtaining the time series data of the smart meter for the first time, the target node usually queries the metadata for the bound pre-aggregation function. When subsequently obtaining the time series data of the smart meter, the target node may directly perform pre-aggregation processing, and does not need to query the bound pre-aggregation function again. In addition, grouping of the time series data and obtaining of the pre-aggregation function bound to the timeseries may be performed simultaneously or may be performed sequentially. This is not limited in this embodiment of this application.

S335: The target node invokes the pre-aggregation function to pre-aggregate the time series data in the group, to generate pre-aggregated data.

For example, there are two pieces of time series data in the current group: <power, 2023-6-20 20:30, 99> and <power, 2023-6-20 20:31, 100>. The pre-aggregation function bound to the timeseries powers is a sum function. In this case, the target node may execute the sum function to calculate a sum of 99 and 100, to obtain pre-aggregated data 199. The pre-aggregated data 199 is cached in the memory, and after the new power time series data is obtained, the sum function is performed on new power time series data, to update the pre-aggregated data.

S336: The memory triggers a disk writing condition, and writes the time series data and the pre-aggregated data into different files in the disk in parallel.

For example, when a usage of the memory exceeds a usage threshold, the target node executes a Flush command, to write the time series data and the pre-aggregated data in the memory into different files in the disk. The pre-aggregation range is automatically determined by the Flush command, and there is no need to set the pre-aggregation time range in advance. The pre-aggregated data file and time series data file are stored in the same directory, facilitating data deletion and combination.

An optional directory structure is as follows:
- .../power/20220105/12343678.data; and
- .../power /20220105/12343678.agg.

The user may send a query command to the target node, to view the pre-aggregated data corresponding to the timeseries. An optional query command is as follows:
Show timeseries power.

As shown in FIG. 7, S340 may include the following content.

S341: Receive a command for removing the pre-aggregation function bound to a timeseries.

For example, the user may issue the following command:
ALTER timeseries power DELETE AGG max.

The command instructs the target node to remove the binding relationship between the timeseries power and the pre-aggregation function max. After receiving the command, the target node performs the following steps.

S342: Determine whether the timeseries is bound to the pre-aggregation function.

If the time series is not bound to the pre-aggregation function, the unbinding procedure ends; if the time series is bound to the pre-aggregation function, the following steps are performed.

S343: Remove the pre-aggregation function bound to the timeseries.

For example, the target node may delete the binding relationship between the timeseries power and the pre-aggregation function max from the metadata module. For the clustered server, the target node may further notify another node to synchronize latest metadata, that is, notify the another node to delete the binding relationship between the timeseries power and the pre-aggregation function max.

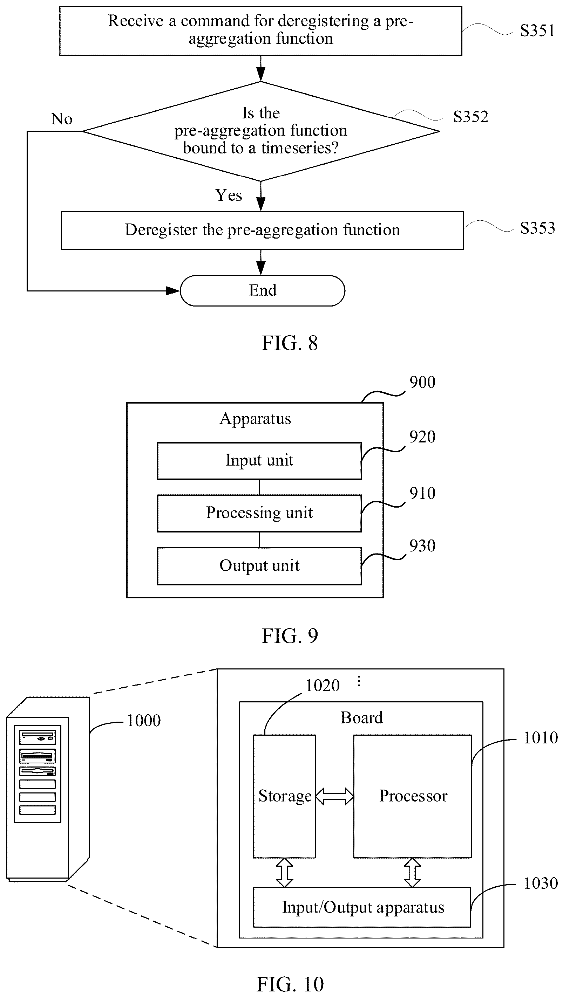

As shown in FIG. 8, S350 may include the following content.

S351: Receive a command for deregistering the pre-aggregation function.

In some cases, if the user does not want to use some pre-aggregation functions, the user may send a command for deregistering the pre-aggregation function to the target node. After receiving the command, the target node performs the following steps.

S352: Determine whether the pre-aggregation function is bound to the timeseries.

If the pre-aggregation function is bound to the timeseries, it indicates that the pre-aggregation function may be being used. Deregistering the pre-aggregation function may interrupt processing of the time series data. The target node may prompt the user to remove all binding relationships of the pre-aggregation function, and end the deregistration procedure.

If the pre-aggregation function is not bound to the timeseries, it indicates that the pre-aggregation function is not used, and deregistering the pre-aggregation function does not affect processing of the time series data. The target node may perform the following steps.

S353: Deregister the pre-aggregation function.

For example, the target node may delete information related to the pre-aggregation function max from the metadata module, to complete deregistration of the pre-aggregation function max. For the clustered server, the target node may further notify another node to synchronize latest metadata, that is, notify the another node to deregister the pre-aggregation function max.

The foregoing describes in detail an example of the method provided in embodiments of this application. It may be understood that, to implement the foregoing functions, a corresponding apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

FIG. 9 is a diagram of a structure of an apparatus 900 for pre-aggregating time series data according to an embodiment of this application. The apparatus 900 includes a processing unit 910, an input unit 920, and an output unit 930. The input unit 920 performs a receiving step or an input step under control of the processing unit 910. The output unit 930 performs a sending step or an output step under control of the processing unit 910.

The input unit 920 is configured to obtain at least one piece of time series data from a first device, where the first device is a generation device of the at least one piece of time series data, or the first device is a node device of a time series database, and any one of the at least one piece of time series data includes an identifier.

The processing unit 910 is configured to: determine a pre-aggregation method based on the identifier of the at least one piece of time series data, where a preset binding relationship exists between the pre-aggregation method and the identifier of the at least one piece of time series data; process the at least one piece of time series data by using the pre-aggregation method, to generate pre-aggregated data; and write the pre-aggregated data and the at least one piece of time series data into a memory.

The output unit 930 is configured to when a usage of the memory satisfies a trigger condition, write the pre-aggregated data and the at least one piece of time series data into a disk.

Optionally, the processing unit 910 is specifically configured to: write the at least one piece of time series data into a first file in the disk; and write the pre-aggregated data into a second file in the disk.

Optionally, the first file and the second file are stored in a same directory.

Optionally, the processing unit 910 is specifically configured to write the pre-aggregated data and the at least one piece of time series data into the disk in parallel.

Optionally, the at least one piece of time series data includes a plurality of pieces of time series data, the plurality of pieces of time series data are time series data of a same type, and the plurality of pieces of time series data are stored in a same memory block in the memory.

Optionally, the trigger condition includes: The usage of the memory is greater than or equal to a usage threshold; or a usage of the memory block in the memory is greater than or equal to a usage threshold, and the memory block is used for storing the pre-aggregated data and the at least one piece of time series data.

Optionally, before processing the at least one piece of time series data by using the pre-aggregation method, the input unit 920 is further configured to receive first indication information, where the first indication information indicates the binding relationship. The processing unit 910 is further configured to store the identifier of the at least one piece of time series data and an identifier of the pre-aggregation method in the metadata module based on the first indication information. The processing unit 910 is specifically configured to determine the identifier of the pre-aggregation method form the metadata module based on the identifier of the at least one piece of time series data, and determine the pre-aggregation method based on the identifier of the pre-aggregation method.

Optionally, after writing the pre-aggregated data and the at least one piece of time series data into the disk, the input unit 920 is further configured to receive second indication information, where the second indication information indicates to remove the binding relationship. The processing unit 910 is further configured to delete, based on the second indication information, the identifier of the pre-aggregation method stored in the metadata module.

Optionally, the input unit 920 is further configured to receive third indication information, where the third indication information indicates to deregister the pre-aggregation method. The processing unit 910 is further configured to delete, based on the third indication information, the pre-aggregation method stored in the metadata module

It may be clearly understood by a person skilled in the art that for a detailed working process of the apparatus 900 and technical effect generated by execution steps, reference may be made to the descriptions in the foregoing corresponding method embodiment. For brevity, details are not described herein again.

The apparatus 900 may be a server or a chip. The processing unit 910 may be implemented by hardware or software. When the processing unit 910 is implemented by hardware, the processing unit 910 may be a logic circuit, an integrated circuit, or the like. When the processing unit 910 is implemented by software, the processing unit 910 may be a general-purpose processor, and is implemented by reading software code stored in a storage unit. The storage unit may be integrated in the processing unit 910, or located outside the processing unit 910 and exist independently.

FIG. 10 is a diagram of a structure of a server according to an embodiment of this application. For ease of descriptions, FIG. 10 shows only main components of the server. As shown in FIG. 10, a server 1000 includes a processor 1010, a storage 1020, and an input/output apparatus 1030. The processor 1010 is mainly configured to: process a time series database protocol and time series data, control the entire server 1000, execute a software program, and process data of the software program, for example, configured to support the server 1000 in performing the actions described in the foregoing method embodiments. The storage 1020 is mainly configured to store the software program and the data. The input/output apparatus 1030 is, for example, a network interface card or an antenna, and is mainly configured to receive data and output data to a user. The processor 1010, the storage 1020, and the input/output apparatus 1030 may be connected through various buses.

The processor 1010 and the storage 1020 may serve one or more boards. In other words, a storage and a processor may be disposed on each board. Alternatively, a plurality of boards may share a same storage and a same processor. In addition, a necessary circuit may further be disposed on each board.

A person skilled in the art may understand that, for ease of description, FIG. 10 shows only one storage and one processor. In an actual server, there may be a plurality of processors and a plurality of storages. The storage may also be referred to as a storage medium, a storage device, or the like. This is not limited in this application.

It may be understood that, the processor in embodiments of this application may be an integrated circuit chip, and has a signal processing capability. In an implementation process, steps in the foregoing method embodiments can be implemented by using a hardware integrated logic circuit, or instructions in a form of software in the processor. The processor may be a CPU, SoC, ASIC, FPGA, MCU, a PLD, or another logic device, for example, a discrete gate, a transistor logic device, or a discrete hardware component. It may implement or perform the methods, the steps, and logical block diagrams that are disclosed in embodiments of this application.

It may be understood that the storage in this embodiment of this application may be a volatile memory or a non-volatile memory, or may include a volatile memory and a non-volatile memory. The non-volatile memory may be a ROM, a PROM, an EPROM, an EEPROM, or a flash memory. The volatile memory may be a RAM, and is used as an external cache. According to an exemplary but not limiting description, RAMs of many forms are applicable, such as an SRAM, a DRAM, an SDRAM, a DDR SDRAM, an ESDRAM, an SLDRAM, and a DR RAM. It should be noted that the storage in the system and the method described herein includes but is not limited to these and any storage of another proper type.

In an implementation process, steps in the foregoing methods can be implemented by using a hardware integrated logic circuit, or instructions in a form of software in the processor. The steps of the method disclosed with reference to embodiments of this application may be directly performed by a hardware processor, or may be performed by using a combination of hardware in the processor and a software module. The software module may be located in a mature storage medium in the art, for example, a random access register, a flash memory, a read-only memory, a programmable read-only memory, an electrically erasable programmable memory, or a register. The storage medium is located in the storage, and a processor reads information in the storage and completes the steps in the foregoing methods in combination with hardware of the processor. To avoid repetition, details are not described herein again.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disk (solid-state disk, SSD)), or the like.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It should be understood that, in embodiments of this application, the terminal device and/or the network device may perform some or all of the steps in each embodiment. These steps or operations are merely examples. Other operations or variations of various operations may be further performed in embodiments of this application. In addition, the steps may be performed in a sequence different from a sequence shown in embodiments, and not all of operations in embodiments of this application may be performed. In addition, the sequence numbers of the foregoing processes do not mean an execution sequence. The execution sequence of the processes should be determined based on functions and internal logic of the processes, and should not constitute any limitation on an implementation process of embodiments of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

It should be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely optional embodiments of the technical solutions of this application, but are not intended to limit the protection scope of this application. Any modification, equivalent replacement, improvement, or the like made within the principle of this application should fall within the protection scope of this application.

## Claims

1. A method for pre-aggregating time series data, comprising:
obtaining at least one piece of time series data from a first device, wherein the first device is a generation device of the at least one piece of time series data, or the first device is a node device of a time series database, and any one of the at least one piece of time series data comprises an identifier;
determining a pre-aggregation method based on the identifier of the at least one piece of time series data, wherein a preset binding relationship exists between the pre-aggregation method and the identifier of the at least one piece of time series data;
processing the at least one piece of time series data by using the pre-aggregation method, to generate pre-aggregated data;
writing the pre-aggregated data and the at least one piece of time series data into a memory; and
when a usage of the memory satisfies a trigger condition, writing the pre-aggregated data and the at least one piece of time series data into a disk.

2. The method according to claim 1, wherein the writing the pre-aggregated data and the at least one piece of time series data into the disk comprises:
writing the at least one piece of time series data into a first file in the disk; and
writing the pre-aggregated data into a second file in the disk.

3. The method according to claim 2, wherein the first file and the second file are stored in a same directory.

4. The method according to any one of claims 1 to 3, wherein the writing the pre-aggregated data and the at least one piece of time series data into the disk comprises:
writing the pre-aggregated data and the at least one piece of time series data into the disk in parallel.

5. The method according to any one of claims 1 to 4, wherein the at least one piece of time series data comprises a plurality of pieces of time series data, the plurality of pieces of time series data are time series data of a same type, and the plurality of pieces of time series data are stored in a same memory block in the memory.

6. The method according to any one of claims 1 to 5, wherein the trigger condition comprises:
the usage of the memory is greater than or equal to a usage threshold; or
a usage of the memory block in the memory is greater than or equal to a usage threshold, and the memory block is used for storing the pre-aggregated data and the at least one piece of time series data.

7. The method according to any one of claims 1 to 6, wherein
before the processing the at least one piece of time series data by using the pre-aggregation method, the method further comprises:
receiving first indication information, wherein the first indication information indicates the binding relationship; and
storing the identifier of the at least one piece of time series data and an identifier of the pre-aggregation method in a metadata module based on the first indication information; and
the determining the pre-aggregation method based on the identifier of the at least one piece of time series data comprises:
determining the identifier of the pre-aggregation method from the metadata module based on the identifier of the at least one piece of time series data; and
determining the pre-aggregation method based on the identifier of the pre-aggregation method.

8. The method according to claim 7, wherein after the writing the pre-aggregated data and the at least one piece of time series data into the disk, the method further comprises:
receiving second indication information, wherein the second indication information indicates to remove the binding relationship; and
deleting, based on the second indication information, the identifier of the pre-aggregation method stored in the metadata module.

9. The method according to claim 8, wherein the method further comprises:
receiving third indication information, wherein the third indication information indicates to deregister the pre-aggregation method; and
deleting, based on the third indication information, the pre-aggregation method stored in the metadata module.

10. An apparatus for pre-aggregating time series data, comprising:
a module, configured to perform the method according to any one of claims 1 to 9.

11. An apparatus for pre-aggregating time series data, comprising:
a processor, configured to execute a computer program stored in a storage, wherein the apparatus is caused to perform the method according to any one of claims 1 to 9; and
a communication interface, wherein the communication interface is coupled to the processor, and is configured to input or output information.

12. A computer-readable storage medium, wherein the computer-readable storage medium stores a computer program; and when the computer program is executed by a processor, the processor is caused to perform the method according to any one of claims 1 to 9.

13. A computer program product, wherein when the computer program product is executed by a processor, the method according to any one of claims 1 to 9 is caused to be performed.
